# EUROPÄISCHE PATENTSCHRIFT

(11) **EP 3 445 963 B1**
(45) Veröffentlichungstag und Bekanntmachung des Hinweises auf die Patenterteilung: **24.06.2020**
(21) Anmeldenummer: 17721961.5
(22) Anmeldetag: 21.04.2017
(51) Int. Cl.: F02M 21/02, F02D 19/06

(54) **DUAL-FUEL-KRAFTSTOFFEINSPRITZSYSTEM FÜR EINE BRENNKRAFTMASCHINE**
DUAL-FUEL INJECTION SYSTEM FOR AN INTERNAL COMBUSTION ENGINE
SYSTÈME D'INJECTION À DEUX CARBURANT POUR UN MOTEUR A COMBUSTION INTERNE

(30) Priorität: 22.04.2016 DE 102016107454
(43) Veröffentlichungstag der Anmeldung: 27.02.2019
(73) Patentinhaber: L'Orange GmbH, 70435 Stuttgart (DE)
(72) Erfinder: BERGER, Ingmar, 70374 Stuttgart (DE); SCHNEIDER, Hartmut, 72657 Altenried (DE)
(74) Vertreter: Conroy, John
(86) Internationale Anmeldenummer: PCT/EP2017/025093
(87) Internationale Veröffentlichungsnummer: WO 2017/182142

(56) Entgegenhaltungen:
- DE-A1-102013 017 853
- DE-A1-102014 105 439
- US-A1- 2009 020 631

## Beschreibung

Die Erfindung bezieht sich auf ein Dual-Fuel-Kraftstoffeinspritzsystem für eine Brennkraftmaschine nach dem Oberbegriff des Anspruches 1.

In der DE 10 2010 061 183 A1 wird eine Brennkraftmaschine mit einem Dual-Fuel-Kraftstoffeinspritzsystem beschrieben. Der Betrieb der Brennkraftmaschine erfolgt mit flüssigem oder mit gasförmigem Kraftstoff, dessen Einspritzung über Kraftstoffinjektoren des Dual-Fuel-Kraftstoffeinspritzsystems erfolgt, wobei für die Einspritzung des Flüssigkraftstoffs im Flüssigkraftstoffbetrieb größere Injektoren und für eine Piloteinspritzung des Flüssigkraftstoffs im Gasbetrieb kleinere Injektoren vorgesehen sind. Die Förderung des Flüssigkraftstoffes zu den verschieden großen Injektoren erfolgt über entsprechend unterschiedlich dimensionierte Pumpen.

Auch aus der DE 10 2014 105 439 A1 ist ein Dual-Fuel-Kraftstoffeinspritzsystem für Brennkraftmaschinen bekannt. Die Einspritzung erfolgt über Flüssigkraftstoffinjektoren und Brenngasinjektoren, wobei der Zufluss des Kraftstoffes zu den jeweiligen Injektoren über Schaltventile steuerbar ist. Ein weiteres Beispiel eines Dual-Fuel-Kraftstoffeinspritzsystem ist in der DE 10 2013 017 853 gezeigt.

Der Erfindung liegt die Aufgabe zugrunde, ein konstruktiv einfach aufgebautes Dual-Fuel-Kraftstoffeinspritzsystem zu schaffen.

Diese Aufgabe wird erfindungsgemäß mit den Merkmalen des Anspruches 1 gelöst. Die Unteransprüche geben zweckmäßige Weiterbildungen an.

Das erfindungsgemäße Dual-Fuel-Kraftstoffeinspritzsystem wird in bzw. für Brennkraftmaschinen eingesetzt und verwendet als Flüssigkraftstoff beispielsweise Dieselkraftstoff oder Schweröl oder Bioöl und als Gaskraftstoff ein Brenngas wie zum Beispiel Erdgas oder Biogas. Der Flüssigkraftstoff und der Gaskraftstoff werden über jeweils einen zugeordneten Einspritzzweig der Brennkraftmaschine zugeführt, in dem jeweils eine Injektoranordnung für die Einspritzung des flüssigen bzw. gasförmigen Kraftstoffes angeordnet ist. Die Gasinjektoranordnung im Gaskraftstoff-Einspritzzweig ist über ein Steuerfluid ansteuerbar, das die Gasinjektoranordnung zwischen Öffnungs- und Schließposition verstellt. Erfindungsgemäß bildet der Flüssigkraftstoff das Steuerfluid der Gasinjektoranordnung.

Diese Vorgehensweise hat den Vorteil, dass kein Aktuierungskreislauf mit einem zusätzlichen Hydraulikfluid zur Ansteuerung der Gasinjektoranordnung erforderlich ist. Es genügt vielmehr, einen Teilstrom des Flüssigkraftstoffes abzuzweigen und als Steuerfluid zur Ansteuerung der Gasinjektoranordnung zu verwenden. Ein zusätzliches Hydraulikfluid für die Ansteuerung der Gasinjektoranordnung ist nicht erforderlich, so dass auch entsprechende Vorratsbehälter und Leitungen entfallen können.

Bei der erfindungsgemäßen Ausführung genügt ein gemeinsamer Tank zur Aufnahme des Flüssigkraftstoffes, der im Flüssigkraftstoffbetrieb zu den zugeordneten Flüssigkraftstoffinjektoren geführt wird und im Gasbetrieb die Gasinjektoranordnung steuert.

Vorteilhafterweise wird im Gasbetrieb eine Piloteinspritzung mit dem Flüssigkraftstoff zur Zündung des Gasgemisches durchgeführt.

Gemäß einer vorteilhaften Ausführung umfasst das Dual-Fuel-Kraftstoffeinspritzsystem eine Hochdruckpumpe, über die der Flüssigkraftstoff zur Gasinjektoranordnung im Gasbetrieb gefördert wird. Die Hochdruckpumpe kann Teil einer Pumpenanordnung sein, welche mehrere parallel und/oder in Reihe geschaltete Pumpen umfasst, über die sowohl der erforderliche Druck im Flüssigkraftstoff für die Einspritzung im Flüssigkraftstoffbetrieb als auch für die Ansteuerung der Gasinjektoranordnung sowie gegebenenfalls für die Piloteinspritzung im Gasbetrieb erzeugt wird.

Die Pumpenanordnung weist beispielsweise zwei parallel geschaltete Hochdruckpumpen auf, von denen eine erste Hochdruckpumpe zur Förderung des Flüssigkraftstoffs zur Gasinjektoranordnung zur Steuerung derselben und die zweite Hochdruckpumpe ausschließlich zur Förderung des Flüssigkraftstoffs zu Flüssigkraftstoffinjektoren eingesetzt werden. Die erste Hochdruckpumpe kann gegebenenfalls zusätzlich im Flüssigkraftstoffbetrieb zu den Flüssigkraftstoffinjektoren fördern, so dass diesen Injektoren der Flüssigkraftstoff gemeinsam mit der zweiten Hochdruckpumpe zugeführt wird. Diese Ausführung hat den Vorteil, dass beide Hochdruckpumpen kleiner dimensioniert werden können als eine einzige Pumpe, welche den hohen Flüssigkraftstoffdruck für den Flüssigkraftstoffbetrieb zur Verfügung stellen muss.

Indem zwei Pumpen vorgesehen sind, können diese, gemäß einer weiteren vorteilhaften Ausführung, im Hinblick auf ihre Pumpenleistung unterschiedlich groß dimensioniert sein. Hierbei ist insbesondere diejenige Hochdruckpumpe, die zur Ansteuerung der Gasinjektoranordnung verwendet wird, größer dimensioniert als die weitere Hochdruckpumpe, die ausschließlich zur Förderung des Flüssigkraftstoffs zu den Flüssigkraftstoffinjektoren eingesetzt wird. Es kann beispielsweise zweckmäßig sein, dass die größere Hochdruckpumpe mindestens 75 %, gegebenenfalls mindestens 90 % der Gesamtpumpenleistung und die zweite Hochdruckpumpe entsprechend nur maximal 25 % oder maximal 10 % der Gesamtpumpenleistung erbringt.

In einer weiteren Ausführung ist die Hochdruckpumpe, die zur Ansteuerung der Gasinjektoranordnung verwendet wird, kleiner dimensioniert als die weitere Hochdruckpumpe, die ausschließlich zur Förderung des Flüssigkraftstoffs zu den Flüssigkraftstoffinjektoren eingesetzt wird.

Es kann zweckmäßig sein, der einen oder den mehreren Hochdruckpumpen, insbesondere in der Ausführung mit zwei parallel geschalteten Hochdruckpumpen, eine Vorförderpumpe vorzuschalten. Des Weiteren ist es auch möglich, lediglich eine Hochdruckpumpe vorzusehen, die ausreichend groß dimensioniert ist, um insbesondere den hohen Druck im Flüssigkraftstoffbetrieb zu erzeugen.

Für den Fall mehrerer Hochdruckpumpen, insbesondere zwei parallel geschaltete Hochdruckpumpen können diese in einem gemeinsamen Pumpengehäuse angeordnet sein, wobei gegebenenfalls die Ausgänge der Pumpen separat geregelt werden, beispielsweise über jeweils eine Saugdrosselregelung. Der Vorteil des gemeinsamen Pumpengehäuses für mehrere Pumpen liegt im geringeren Bauraumbedarf.

Gemäß noch einer weiteren zweckmäßigen Ausführung ist der Hochdruckpumpe, über die wahlweise Flüssigkraftstoff zu den Flüssigkraftstoffinjektoren oder zur Gasinjektoranordnung förderbar ist, eine Schalteinrichtung zugeordnet, die zwischen verschiedenen Schaltpositionen verstellbar ist. Je nach Schaltposition der Schalteinrichtung wird Flüssigkraftstoff zu den Flüssigkraftstoffinjektoren oder zur Gasinjektoranordnung gefördert.

Die Schalteinrichtung kann entweder in die Hochdruckpumpe integriert oder separat von der Hochdruckpumpe ausgebildet sowie außerhalb der Hochdruckpumpe angeordnet sein. Bei in die Hochdruckpumpe integrierter Schalteinrichtung weist die Hochdruckpumpe beispielsweise zwei Ausgänge auf, die jeweils geöffnet und geschlossen werden können und die ein wahlweises Fördern von Flüssigkraftstoff zu den Flüssigkraftstoffinjektoren oder zur Gasinjektoranordnung ermöglichen.

Gemäß noch einer weiteren zweckmäßigen Ausführung ist der Hochdruckpumpe, über die wahlweise Flüssigkraftstoff zu den Flüssigkraftstoffinjektoren oder zur Gasinjektoranordnung förderbar ist, ein die Schalteinrichtung bildendes Schaltventil nachgeordnet, um je nach Betriebsart Flüssigkraftstoff entweder nur zu den Flüssigkraftstoffinjektoren für den Flüssigkraftstoffbetrieb oder Flüssigkraftstoff im Gasbetrieb sowohl zur Steuerung der Gasinjektoranordnung als auch zur Piloteinspritzung zu den Kraftstoffinjektoren zu fördern. In dieser Ausführung ist die Schalteinrichtung separat von der Hochdruckpumpe ausgebildet.

Gemäß einer weiteren zweckmäßigen Ausführung ist die Gasinjektoranordnung über eine Leckagerücklaufleitung mit einem Flüssigkraftstofftank verbunden. Ebenso können die Flüssigkraftstoffinjektoren über eine Leckagerücklaufleitung mit dem Flüssigkraftstofftank verbunden sein. Vorteilhafterweise münden Leitungsabschnitte von der Gasinjektoranordnung und den Flüssigkraftinjektoren in eine gemeinsame Leckagerücklaufleitung.

Die Hochdruckpumpe bzw. die Hochdruckpumpen können gegebenenfalls über Elektromotoren angetrieben werden, wodurch der Energiebedarf minimiert werden kann und außerdem eine präzise Steuerung der Pumpen möglich ist.

Gemäß einer weiteren vorteilhaften Ausführung befindet sich in der Steuerfluidleitung, die von der Pumpenanordnung zur Gasinjektoranordnung führt, ein Überdruckventil zum Schutz der Gasinjektoranordnung vor einem zu hohen Druck, insbesondere während eines Umschaltvorgangs zwischen Gas- und Flüssigkraftstoffbetrieb. Das Überdruckventil kann über eine Verbindungsleitung mit dem Flüssigkraftstofftank oder der Leckageleitung verbunden sein.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung eine Brennkraftmaschine mit einem Dual-Fuel-Kraftstoffeinspritzsystem, dargestellt im Flüssigkraftstoffbetrieb,
- Fig. 2: die Brennkraftmaschine mit Dual-Fuel-Kraftstoffeinspritzsystem, dargestellt im Gasbetrieb.

In den Figuren sind gleiche Bauteile mit gleichen Bezugszeichen versehen.

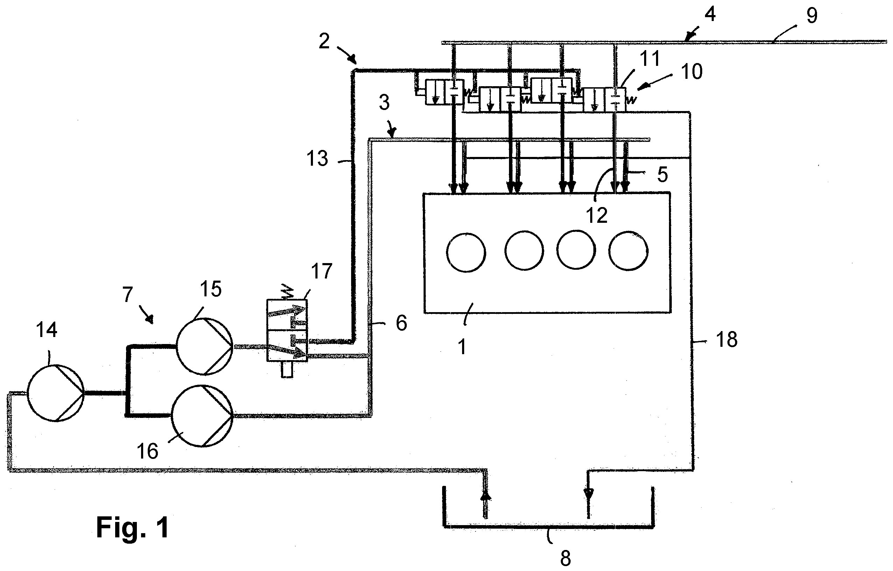

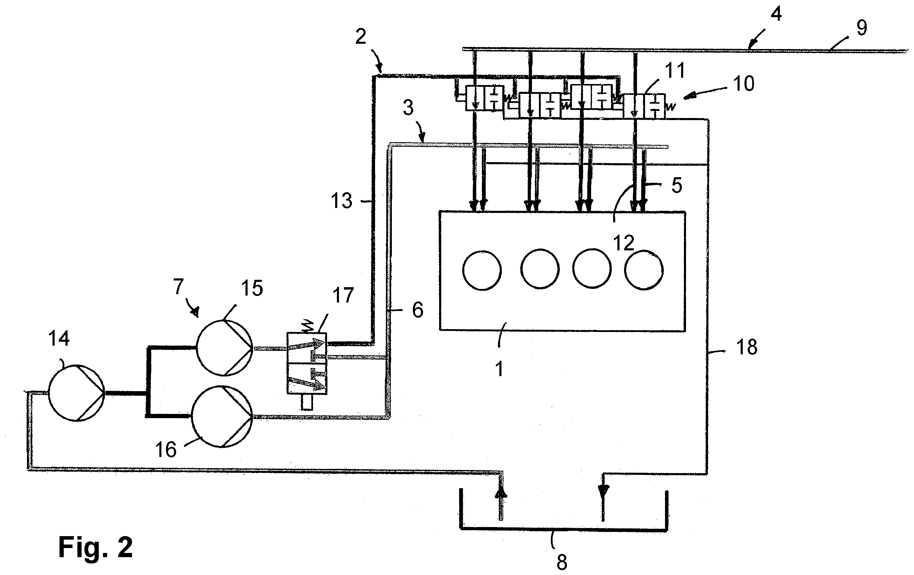

In den **Fig. 1** **und** **2** ist eine Brennkraftmaschine 1 dargestellt, die mit einem Dual-Fuel-Kraftstoffeinspritzsystem 2 für den alternativen Betrieb mit Flüssigkraftstoff und mit Brenngas ausgestattet ist. Das Dual-Fuel-Kraftstoffeinspritzsystem 2 umfasst einen Flüssigkraftstoff-Einspritzzweig 3, über den der Flüssigkraftstoff der Brennkraftmaschine 1 zugeführt wird, sowie einen Gaskraftstoff-Einspritzzweig 4 zur Zufuhr von Brenngas zur Brennkraftmaschine 1. Im Flüssigkeitskraftstoff-Einspritzzweig 3 befinden sich Kraftstoffinjektoren 5, die über eine Flüssigkraftstoffleitung 6, in der eine Pumpenanordnung 7 angeordnet ist, mit einem Flüssigkeitskraftstofftank 8 verbunden sind. Über die Pumpenanordnung 7 wird der Flüssigkraftstoff aus dem Tank 8 unter Hochdruck den Flüssigkeitskraftstoffinjektoren 5 zur Einspritzung in die Zylinder der Brennkraftmaschine 1 zugeführt.

Der Gaskraftstoff-Einspritzzweig 4 umfasst eine Gasleitung 9 zur Zufuhr von Gas aus einem Gasreservoir und eine Gasinjektoranordnung 10 zur gesteuerten Einspritzung des Brenngases in die Zylinder der Brennkraftmaschine. Die Gasinjektoranordnung 10 umfasst Steuerventile 11 sowie jeweils einem Steuerventil 11 zugeordnete Gasinjektoren 12 mit einer Gasnadel, über die das Brenngas in die Zylinder der Brennkraftmaschine geleitet wird. Über die Steuerventile 11 werden die zugeordneten Gasinjektoren 12 zwischen Öffnungs- und Schließposition verstellt.

Die Steuerventile 11 der Gasinjektoranordnung 10 werden von einem Steuerfluid gesteuert, bei dem es sich um den Flüssigkraftstoff aus dem Tank 8 handelt. Die Steuerventile 11 sind über eine Leitung 13 mit der Pumpenanordnung 7 und dem Flüssigkraftstofftank 8 verbunden. Über die Ansteuerung der Steuerventile 11 im Gasbetrieb mithilfe des Flüssigkraftstoffes, der als Steuerfluid fungiert, erfolgt die gesteuerte Einspritzung von Brenngas in die Brennkraftmaschine 1.

Die Pumpenanordnung 7 umfasst eine Vorpumpe 14 und zwei parallel geschaltete Hochdruckpumpen 15 und 16, die mit der Vorpumpe 14 in Reihe geschaltet und dieser nachgeordnet sind. Des Weiteren gehört ein Schaltventil 17 stromab der ersten Hochdruckpumpe 15 zur Pumpenanordnung 7. Die erste Hochdruckpumpe 15 kann mithilfe des Schaltventils 17 in Strömungsverbindung mit der Flüssigkeitskraftstoffleitung 6 (Fig. 1, Flüssigkraftstoffbetrieb) oder in Strömungsverbindung mit der Leitung 13 zur Ansteuerung der Steuerventile 11 (Fig. 2, Gasbetrieb) geschaltet werden. Die zweite Hochdruckpumpe 16 befindet sich in der Flüssigkeitskraftstoffleitung 6, über die sowohl im Flüssigkraftstoffbetrieb als auch im Gasbetrieb Flüssigkraftstoff zu den Kraftstoffinjektoren 5 gefördert wird.

Sowohl die Steuerventile 11 der Gasinjektoranordnung 10 als auch die FlüssigKraftstoffinjektoren 5 sind mit einer Leckagerücklaufleitung 18 verbunden, über die Leckagefluid des Flüssigkraftstoffes zum Tank 8 zurückgeführt wird.

Bei dem in Fig. 1 dargestellten Flüssigkraftstoffbetrieb ist das Schaltventil 17 in der Weise geschaltet, dass der von der ersten Hochdruckpumpe 15 geförderte Flüssigkraftstoff aus dem Tank 8 ausschließlich in die Flüssigkraftstoffleitung 6 des Flüssigkraftstoff-Einspritzzweigs 3 und weiter zu den Flüssigkraftstoffinjektoren 5 gefördert wird. Der Gaskraftstoff-Einspritzzweig 4 ist außer Betrieb.

Zusätzlich zur ersten Hochdruckpumpe 15 wird auch über die zweite Hochdruckpumpe 16 Flüssigkraftstoff in die Leitung 6 und zu den Injektoren 5 gefördert. Die beiden Hochdruckpumpen 15 und 16 sind im Hinblick auf ihre Pumpenleistung unterschiedlich groß dimensioniert. Die erste Hochdruckpumpe 15 weist eine größere Pumpenleistung als die zweite Hochdruckpumpe 16 auf. Über den gleichzeitigen Betrieb der beiden Hochdruckpumpen 15 und 16 ist insbesondere der maximale Druck des Flüssigkraftstoffs von beispielsweise 2.200 bar einstellbar. Über den alleinigen Betrieb der zweiten Hochdruckpumpe 16 ist dagegen nur ein geringerer Druck des Flüssigkeitskraftstoffes einstellbar, beispielsweise maximal 1.500 bar.

Es kann gegebenenfalls genügen, dass im Flüssigkraftstoffbetrieb gemäß Fig. 1 nur die erste Hochdruckpumpe 15 in Betrieb ist.

Der Gasbetrieb des Dual-Fuel-Kraftstoffeinspritzsystems ist in Fig. 2 dargestellt. Im Gasbetrieb ist das Schaltventil 17 in der Weise geschaltet, dass der von der ersten Hochdruckpumpe 15 geförderte Kraftstoff in die Leitung 13 zu der Gasinjektoranordnung 10 geführt wird und dort die Steuerventile 11 schaltet, so dass Gas aus der Gasleitung 9 über die Steuerventile 11 zu den Gasinjektoren 12 geführt wird, über die die Einspritzung in die Zylinder der Brennkraftmaschine 1 erfolgt.

Zugleich wird über die zweite Hochdruckpumpe 16 Kraftstoff in die Flüssigkraftstoffleitung 6 und weiter zu den Flüssigkraftstoffinjektoren 5 geleitet, um eine Piloteinspritzung für die Zündung des Gasgemisches durchzuführen. Der Druck, unter dem der Flüssigkraftstoff von der zweiten Hochdruckpumpe 16 gefördert wird, liegt niedriger als der Druck des Flüssigkraftstoffes im Flüssigkraftstoffbetrieb gemäß Fig. 1.

Leckagemengen, die im Gasbetrieb bei der Ansteuerung der Steuerventile 11 und im Flüssigkraftstoffbetrieb an den Injektoren 5 auftreten, werden über die Leckagerücklaufleitung 18 zum Kraftstofftank 8 zurückgeführt.

## Patentansprüche

1. Dual-Fuel-Kraftstoffeinspritzsystem für eine Brennkraftmaschine, mit einem Flüssigkraftstoff-Einspritzzweig (3) und einem Gaskraftstoff-Einspritzzweig (4) und mit einer Gasinjektoranordnung (10) im Gaskraftstoff-Einspritzzweig (4), die über ein Steuerfluid ansteuerbar ist, und wobei der Flüssigkraftstoff das Steuerfluid der Gasinjektoranordnung (10) bildet,
**dadurch gekennzeichnet, dass** eine erste Hochdruckpumpe (15) mit einer Schalteinrichtung (17) zur wahlweisen Förderung des Flüssigkraftstoffs zu den Flüssigkraftstoffinjektoren (5) oder zur Gasinjektoranordnung (10) angeordnet ist, dass das Dual-Fuel-Kraftstoffeinspritzsystem (2) die Hochdruckpumpe (15) zur Förderung des Flüssigkraftstoffs zur Gasinjektoranordnung (10) im Gasbetrieb umfasst, und dass das Dual-Fuel-Kraftstoffeinspritzsystem (2) eine zweite Hochdruckpumpe (16) zur Förderung des Flüssigkraftstoffs zu Flüssigkraftstoffinjektoren (5) im Flüssigkraftstoff-Einspritzzweig (3) umfasst.

2. Dual-Fuel-Kraftstoffeinspritzsystem nach Anspruch 1, **dadurch gekennzeichnet, dass** die Schalteinrichtung (17) als ein der gemeinsamen Hochdruckpumpe (15) nachgeordnetes Schaltventil (17) ausgebildet ist.

3. Dual-Fuel-Kraftstoffeinspritzsystem nach einem der Ansprüche 1 bis 2, **dadurch gekennzeichnet, dass** mindestens zwei Hochdruckpumpen (15, 16) angeordnet sind, von denen die erste Hochdruckpumpe (15) zur Förderung des Flüssigkraftstoffs zur Gasinjektoranordnung (10) und die zweite Hochdruckpumpe (16) ausschließlich zur Förderung des Flüssigkraftstoffs zu Flüssigkraftstoffinjektoren (5) einsetzbar ist.

4. Dual-Fuel-Kraftstoffeinspritzsystem nach Anspruch 3,
**dadurch gekennzeichnet, dass** den Hochdruckpumpen (15, 16) eine Vorförderpumpe (14) vorgeschaltet ist.

5. Dual-Fuel-Kraftstoffeinspritzsystem nach Anspruch 3 oder 4, **dadurch gekennzeichnet, dass** die Hochdruckpumpen (15, 16) parallel geschaltet sind.

6. Dual-Fuel-Kraftstoffeinspritzsystem nach einem der Ansprüche 3 bis 5, **dadurch gekennzeichnet, dass** über die erste Hochdruckpumpe (15) wahlweise Flüssigkraftstoff zu den Flüssigkraftstoffinjektoren (5) oder zur Gasinjektoranordnung (10) förderbar ist.

7. Dual-Fuel-Kraftstoffeinspritzsystem nach einem der Ansprüche 3 bis 6, **dadurch gekennzeichnet, dass** die Hochdruckpumpen (15, 16) eine unterschiedlich große Pumpenleistung aufweisen.

8. Dual-Fuel-Kraftstoffeinspritzsystem nach einem der Ansprüche 1 bis 7, **dadurch gekennzeichnet, dass** die Gasinjektoranordnung (10) über eine Leckagerücklaufleitung (18) mit einem Flüssigkraftstofftank verbunden ist.

9. Dual-Fuel-Kraftstoffeinspritzsystem nach einem der Ansprüche 1 bis 8, **dadurch gekennzeichnet, dass** die Flüssigkraftstoffinjektoren (5) über eine Leckagerücklaufleitung (18) mit dem Flüssigkraftstofftank verbunden sind.

10. Brennkraftmaschine mit einem Dual-Fuel-Kraftstoffeinspritzsystem (2) nach einem der Ansprüche 1 bis 9.

11. Verfahren zum Betrieb eines Dual-Fuel-Kraftstoffeinspritzsystem (2) nach einem der Ansprüche 1 bis 10, bei dem im Gasbetrieb Flüssigkraftstoff als Steuerfluid zur Gasinjektoranordnung (10) und zusätzlich Flüssigkraftstoff zu den Flüssigkraftstoffinjektoren (5) gefördert wird.

## Claims

1. Dual-fuel injection system for an internal combustion engine, with a liquid fuel injection branch (3) and a gaseous fuel injection branch (4), and with a gas injector arrangement (10) in the gaseous fuel injection branch (4), which gas injector arrangement (10) can be actuated via a control fluid, and the liquid fuel forming the control fluid of the gas injector arrangement (10), **characterized in that** a first high pressure pump (15) is arranged with a switching device (17) for the selective delivery of the liquid fuel to the liquid fuel injectors (5) or to the gas injector arrangement (10), **in that** the dual-fuel injection system (2) comprises the high pressure pump (15) for the delivery of the liquid fuel to the gas injector arrangement (10) in gas operation, and **in that** the dual fuel injection system (2) comprises a second high pressure pump (16) for the delivery of the liquid fuel to liquid fuel injectors (5) in the liquid fuel injection branch (3).

2. Dual-fuel injection system according to Claim 1, **characterized in that** the switching device (17) is configured as a switching valve (17) which is arranged downstream of the common high pressure pump (15).

3. Dual-fuel injection system according to either of Claims 1 and 2, **characterized in that** at least two high pressure pumps (15, 16) are arranged, of which the first high pressure pump (15) can be used for the delivery of the liquid fuel to the gas injector arrangement (10) and the second high pressure pump (16) can be used exclusively for the delivery of the liquid fuel to liquid fuel injectors (5).

4. Dual-fuel injection system according to Claim 3, **characterized in that** a pre-feed pump (14) is connected upstream of the high pressure pumps (15, 16).

5. Dual-fuel injection system according to Claim 3 or 4, **characterized in that** the high pressure pumps (15, 16) are connected in parallel.

6. Dual-fuel injection system according to one of Claims 3 to 5, **characterized in that** liquid fuel can be delivered via the first high pressure pump (15) selectively to the liquid fuel injectors (5) or to the gas injector arrangement (10).

7. Dual-fuel injection system according to one of Claims 3 to 6, **characterized in that** the high pressure pumps (15, 16) have a pumping capacity of different magnitude.

8. Dual-fuel injection system according to one of Claims 1 to 7, **characterized in that** the gas injector arrangement (10) is connected via a leakage return line (18) to a liquid fuel tank.

9. Dual-fuel injection system according to one of Claims 1 to 8, **characterized in that** the liquid fuel injectors (5) are connected via a leakage return line (18) to the liquid fuel tank.

10. Internal combustion engine with a dual-fuel injection system (2) according to one of Claims 1 to 9.

11. Method for operating a dual-fuel injection system (2) according to one of Claims 1 to 10, in the case of which method, in gas operation, liquid fuel is delivered as control fluid to the gas injector arrangement (10) and, in addition, liquid fuel is delivered to the liquid fuel injectors (5).

## Revendications

1. Système d'injection de carburant bicarburant pour un moteur à combustion interne, comprenant une branche d'injection de carburant liquide (3) et une branche d'injection de carburant gazeux (4), et comprenant un agencement d'injecteur de gaz (10) dans la branche d'injection de carburant gazeux (4), qui peut être commandé par l'intermédiaire d'un fluide de commande, et dans lequel le carburant liquide forme le fluide de commande de l'agencement d'injecteur de gaz (10),
**caractérisé en ce qu'**une première pompe haute pression (15) comprenant un dispositif de commutation (17) est agencée pour le transport optionnel du carburant liquide vers les injecteurs de carburant liquide (5) ou vers l'agencement d'injecteur de gaz (10), **en ce que** le système d'injection de carburant bicarburant (2) comprend la pompe haute pression (15) pour le transport du carburant liquide vers l'agencement d'injecteur de gaz (10) dans le fonctionnement au gaz, et **en ce que** le système d'injection de carburant bicarburant (2) comprend une deuxième pompe haute pression (16) pour le transport du carburant liquide vers les injecteurs de carburant liquide (5) dans la branche d'injection de carburant liquide (3).

2. Système d'injection de carburant bicarburant selon la revendication 1, **caractérisé en ce que** le dispositif de commutation (17) est configuré sous la forme d'une soupape de commutation (17) agencée en aval de la pompe haute pression commune (15).

3. Système d'injection de carburant bicarburant selon l'une quelconque des revendications 1 à 2, **caractérisé en ce qu'**au moins deux pompes haute pression (15, 16) sont agencées, parmi lesquelles la première pompe haute pression (15) peut être utilisée pour le transport du carburant liquide vers l'agencement d'injecteur de gaz (10) et la deuxième pompe haute pression (16) peut être utilisée exclusivement pour le transport du carburant liquide vers les injecteurs de carburant liquide (5).

4. Système d'injection de carburant bicarburant selon la revendication 3, **caractérisé en ce qu'une** pompe de préalimentation (14) est raccordée en amont des pompes haute pression (15, 16).

5. Système d'injection de carburant bicarburant selon la revendication 3 ou 4, **caractérisé en ce que** les pompes haute pression (15, 16) sont raccordées en parallèle.

6. Système d'injection de carburant bicarburant selon l'une quelconque des revendications 3 à 5, **caractérisé en ce que** la première pompe haute pression (15) permet de transporter du carburant liquide au choix vers les injecteurs de carburant liquide (5) ou vers l'agencement d'injecteur de gaz (10).

7. Système d'injection de carburant bicarburant selon l'une quelconque des revendications 3 à 6, **caractérisé en ce que** les pompes haute pression (15, 16) présentent une puissance de pompage différente.

8. Système d'injection de carburant bicarburant selon l'une quelconque des revendications 1 à 7, **caractérisé en ce que** l'agencement d'injecteur de gaz (10) est raccordé par l'intermédiaire d'une conduite de retour de fuites (18) avec un réservoir de carburant liquide.

9. Système d'injection de carburant bicarburant selon l'une quelconque des revendications 1 à 8, **caractérisé en ce que** les injecteurs de carburant liquide (5) sont raccordés par l'intermédiaire d'une conduite de retour de fuites (18) avec le réservoir de carburant liquide.

10. Moteur à combustion interne comprenant un système d'injection de carburant bicarburant (2) selon l'une quelconque des revendications 1 à 9.

11. Procédé d'exploitation d'un système d'injection de carburant bicarburant (2) selon l'une quelconque des revendications 1 à 10, selon lequel, dans le fonctionnement au gaz, un carburant liquide est transporté en tant que fluide de commande vers l'agencement d'injecteur de gaz (10) et en outre un carburant liquide est transporté vers les injecteurs de carburant liquide (5).
